# EUROPEAN PATENT APPLICATION

(11) **EP 4 431 895 A1**
(43) Date of publication of application: **18.09.2024**
(21) Application number: 22892385.0
(22) Date of filing: 01.09.2022
(51) Int. Cl.: G01L 5/00, D06F 89/00, F16F 1/18, G01L 1/04

(54) **FORCE DETECTION DEVICE, FORCE DETECTION METHOD, AND CLOTHES PROCESSING DEVICE**

(30) Priority: 09.11.2021 JP 2021182311
(71) Applicant: Panasonic Intellectual Property Management Co., Ltd., Kadoma-shi, Osaka 571-0057 (JP)
(72) Inventor: OGA Sohei, Kadoma-shi, Osaka 571-0057 (JP); TANDA Kohichi, Kadoma-shi, Osaka 571-0057 (JP); HOSOKAWA Akihiro, Kadoma-shi, Osaka 571-0057 (JP)
(74) Representative: Novagraaf International SA
(86) International application number: PCT/JP2022/032938
(87) International publication number: WO 2023/084882

(57) **Abstract**

Force detection device 40 includes leaf spring 47 that biases a movable unit in a direction in which displacement is suppressed when a force is applied to the movable unit to displace the movable unit, and displacement sensor 48 that detects the displacement of the movable unit. Leaf spring 47 includes a plurality of portions having different rigidities.

## Description

### TECHNICAL FIELD

The present disclosure relates to a force detection device and a force detection method for detecting a force, and a clothes processing device that can use a force detection device.

### BACKGROUND ART

A technique for detecting a force by detecting elastic displacement of an elastic body is used. For example, PTL 1 discloses a technique for detecting a body pressure by providing an elastic body in a transmission mechanism portion disposed between a kneading ball and a drive source for driving the kneading ball and detecting elastic displacement of the elastic body in order to detect a body pressure applied to the kneading ball driven to be able to protrude and retract in an orientation of pressing a person to be treated.

### Citation List

### Patent Literature

PTL 1: Unexamined Japanese Patent Publication No. 2004-357944

### SUMMARY OF THE INVENTION

### Technical problem

The inventors of the present invention have recognized that an object is to improve force detection accuracy while increases in cost and size are suppressed, and have arrived at a technique of the present disclosure.

The present disclosure provides a technique for improving force detection accuracy.

### Solution to problem

A force detection device according to the present disclosure includes an elastic body that biases a movable unit in a direction in which displacement is suppressed when a force is applied to the movable unit to displace the movable unit, and a sensor that detects the displacement of the movable unit. The elastic body includes a plurality of portions having different rigidities.

A force detection method according to the present disclosure includes detecting, when a force is applied to a movable unit to displace the movable unit, magnitude of the force applied to the movable unit by biasing the movable unit in a direction in which displacement is suppressed by at least a first portion of an elastic body including a plurality of portions having different rigidities until a displacement amount reaches a first value, biasing the movable unit in the direction in which the displacement is suppressed by at least a second portion of the elastic body when the displacement amount exceeds the first value, and detecting the displacement amount.

A clothes processing device according to the present disclosure includes a holding device that holds a processing target, a movable unit that is displaced when a force is applied to the holding device, and a force detection device that detects magnitude of the force applied to the holding device. The force detection device includes an elastic body that biases the movable unit in a direction in which displacement is suppressed when the force is applied to the holding device to displace the movable unit, and a sensor that detects the displacement of the movable unit. The elastic body includes a plurality of portions having different rigidities.

### Advantageous effect of invention

According to the technique of the present disclosure, the force detection accuracy can be improved.

### BRIEF DESCRIPTION OF DRAWINGS

Fig. 1 is a perspective view of a clothes processing device according to a first exemplary embodiment.
Fig. 2 is a schematic front configuration diagram of the clothes processing device according to the first exemplary embodiment.
Fig. 3 is a schematic side configuration diagram of the clothes processing device according to the first exemplary embodiment.
Fig. 4 is a schematic configuration diagram of ae force detection device according to the first exemplary embodiment.
Fig. 5 is a perspective view of a worm gear.
Fig. 6 is a front view and a side view of a leaf spring.
Fig. 7 is a schematic horizontal sectional view of a contact portion between the flange and the leaf spring.
Fig. 8A is a diagram schematically illustrating states of the flange and the leaf spring when a movable unit is displaced.
Fig. 8B is a diagram schematically illustrating the states of the flange and the leaf spring when the movable unit is displaced.
Fig. 8C is a diagram schematically illustrating the states of the flange and the leaf spring when the movable unit is displaced.
Fig. 9 is a diagram illustrating a relationship between a displacement amount of the movable unit and an external force applied to the movable unit.
Fig. 10 is a diagram schematically illustrating a relationship between the displacement amount of the movable unit and the external force applied to the movable unit.
Fig. 11 is a diagram illustrating a state where an arm unit is rotated.
Fig. 12A is a diagram illustrating a method of a preliminary operation.
Fig. 12B is a diagram illustrating the method of the preliminary operation.
Fig. 13 is a diagram illustrating an example of a configuration for performing the preliminary operation.
Fig. 14 is a functional configuration diagram of the force detection device according to the first exemplary embodiment.
Fig. 15A is a diagram illustrating the method of the preliminary operation.
Fig. 15B is a diagram illustrating the method of the preliminary operation.

### DESCRIPTION OF EMBODIMENT

### (Underlying knowledge and the like of present disclosure)

A clothes processing device according to the present disclosure includes a holding unit that holds a processing target such as clothes. Movement of the holding unit is controlled by a moving mechanism. An external force is applied to the holding unit in a case where the holding unit comes into contact with another component when the holding unit is being moved. It is necessary to quickly and accurately detect the external force applied to the holding unit and appropriately control the movement of the holding unit.

The inventors have found such a problem, and have made the subject matter of the present disclosure in order to solve this problem. A clothes processing device and a force detection device according to the present disclosure include an elastic body that biases a movable unit such as a holding unit in a direction in which displacement is suppressed when a force is applied to the movable unit to displace the movable unit, and a sensor that detects displacement of the movable unit. The elastic body includes a plurality of portions having different rigidities. As a result, since the force can be detected with an appropriate resolution in accordance with a range of the force applied to the movable unit, force detection accuracy can be improved.

Hereinafter, an exemplary embodiment will be described in detail with reference to the drawings. However, unnecessarily detailed description may be omitted. For example, a detailed description of already well-known matters or a redundant description of substantially the identical configuration may be omitted.

Note that, the accompanying drawings and the following descriptions are provided for those skilled in the art to fully understand the present disclosure, and are not intended to limit the subject matter described in the claims in any way.

### (First exemplary embodiment)

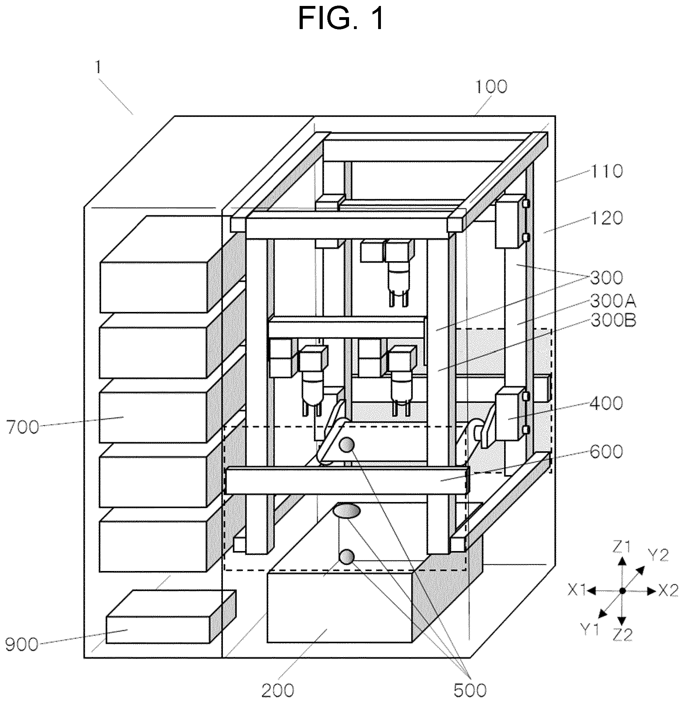

Hereinafter, a first exemplary embodiment will be described with reference to Figs. 1 to 15B. Note that, three directions of clothes processing device 1 will be described as an X direction (left direction X1 and right direction X2) indicated by an arrow in a lateral width direction, a Y direction (front direction Y1 and rear direction Y2) indicated by an arrow in a longitudinal depth direction, and a Z direction (up direction Z1 and down direction Z2) indicated by an arrow in a vertical height direction as viewed from the front.

### [1-1. Configuration]

### [1-1-1. Overall configuration of clothes processing device]

Clothes processing device 1 is a device that holds, recognizes, folds, and stores processing target T as a deformable thin object. As illustrated in Fig. 1, clothes processing device 1 includes housing 100, and receiving unit 200, holding devices 300, working plate device 400, imaging device 500, support unit 600, storage device 700, and control device 900, which are provided in housing 100. Note that, receiving unit 200 and a processing space above the receiving unit may be provided in one housing, and storage device 700 and the like may be provided in another housing, and the housings may be coupled and integrated.

Processing target T is, for example, a deformable thin object represented by a fabric such as clothes and towels, a film, paper, a sheet, and the like. A shape may be a rectangle like a towel, or may be a substantially rectangle like a T-shirt, a running shirt, a long-sleeved shirt, or pants.

housing 100 includes frame 110 forming a rectangular parallelepiped frame, and outline 120 provided on a predetermined surface of the rectangular parallelepiped. Frame 110 and outline 120 may be integrally formed.

Receiving unit 200 is a housing unit that receives processing target T from an outside. As illustrated in Figs. 1 to 3, receiving unit 200 has a box shape with an open upper surface. Receiving unit 200 is disposed at a bottom of clothes processing device 1 to be easily accessed by a user, and is disposed to be taken in and out in the depth direction (Y direction). For example, guide rail 210 is provided at a lower portion, and receiving unit 200 is drawn out in front direction Y1. Processing target T is put in drawn receiving unit 200 from above. When processing target T is put in, receiving unit 200 is returned in rear direction Y2 along guide rail 210 and is housed in housing 100.

Holding device 300 is a device that holds processing target T in order to process processing target T. Holding device 300 includes holding unit 310 that holds processing target T, and moving mechanism 320 that moves holding unit 310 in three directions of the width direction (X direction), the depth direction (Y direction), and the height direction (Z direction). A plurality of holding devices 300 are provided, hold and lift processing target T put in receiving unit 200, and perform unfolding and folding while re-holding processing target T in cooperation with working plate device 400 on which processing target T can be temporarily placed.

As illustrated in Figs. 1 to 3, clothes processing device 1 includes two holding devices 300A and 300B as holding devices 300. Holding device 300A includes one holding unit 310A as holding unit 310, and includes moving mechanism 320A that moves holding unit 310A in three directions. Holding device 300B includes two holding units 310B and 311B as holding unit 310, and includes moving mechanism 320B that moves holding units 310B and 311B in three directions.

Holding units 310A, 310B, and 311B are relatively movable in the width direction, the depth direction, and the height direction with respect to working plate 410 of working plate device 400 to be described later. For example, moving mechanisms 320A and 320B can be positioned such that holding units 310A, 310B, and 311B are lined up in a line along an edge portion of working plate 410.

Holding devices 300A and 300B are connected to control device 900 to be described later to be able to communicate therewith in a wired or wireless manner. Then, operations of holding units 310A, 310B, and 311B and moving mechanisms 320A and 320B are controlled by control device 900.

Moving mechanisms 320A and 320B used in holding devices 300A and 300B will be described by using the configuration of moving mechanism 320A of holding device 300A. A configuration of moving mechanism 320B of holding device 300B is basically the same as a configuration of holding device 300A except for the number of holding units. Thus, holding device 300B may use a reference mark obtained by replacing "A" with "B" in a reference mark of holding device 300A, and the description thereof will be omitted.

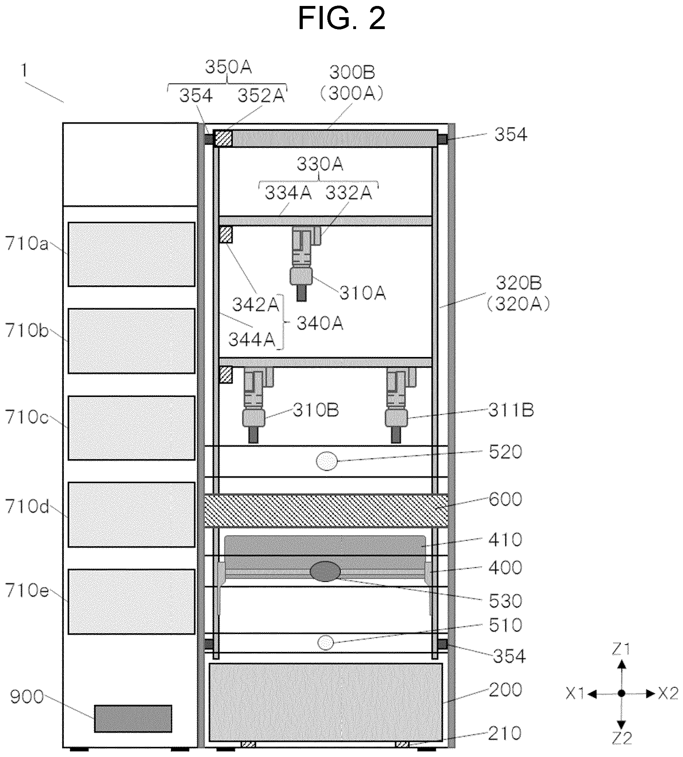

As illustrated in Fig. 2, moving mechanism 320A includes a width-direction moving mechanism 330A, height-direction moving mechanism 340A, and depth-direction moving mechanism 350A.

Width-direction moving mechanism 330A moves holding unit 310A in the width direction (X direction). Width-direction moving mechanism 330A includes width-direction drive unit 332A serving as a driving force source for moving holding unit 310A, and X guide 334A serving as a moving guide. Although not illustrated in detail, width-direction drive unit 332A is a motor capable of performing forward rotation and reverse rotation, and has a pinion gear. X guides 334A are a rack gear and a rail to which a power of width-direction drive unit 332A is transmitted via the pinion gear, and are disposed such that longitudinal directions thereof are along the width direction. Width-direction drive unit 332A slides along X guide 334A by energization. When width-direction drive unit 332A moves in the width direction along X guide 334A, holding unit 310A fixed to width-direction drive unit 332A also moves in the width direction.

Height-direction moving mechanism 340A moves holding unit 310A in the height direction (Z direction) together with width-direction moving mechanism 330A. Height-direction moving mechanism 340A includes height-direction drive unit 342A serving as a driving force source for moving width-direction moving mechanism 330A, and Z guides 344A serving as moving guides. Height-direction drive unit 342A is a motor capable of performing forward rotation and reverse rotation. Although not illustrated in detail, height-direction drive unit 342A includes a transmission shaft that is fixed to a left end of a frame body of width-direction moving mechanism 330A and transmits a driving force to a right end. Two left and right Z guides 344A include a rack and a pinion, and are disposed such that a longitudinal direction thereof is along the height direction. Two left and right Z guides 344A are coupled at upper ends and are formed in an arch shape. Width-direction moving mechanism 330A moves along the height direction by energizing height-direction drive unit 342A.

Depth-direction moving mechanism 350A moves entire holding device 300A (height-direction moving mechanism 340A, width-direction moving mechanism 330A, and holding unit 310A) in the depth direction (Y direction). Depth-direction moving mechanism 350A includes depth-direction drive unit 352A as a power source for moving height-direction moving mechanism 340A, and a plurality of Y guides 354 as moving guides. Although not illustrated in detail, depth-direction drive unit 352A is a motor capable of performing normal rotation and reverse rotation, and has a pinion gear. Depth-direction drive unit 352A includes a transmission shaft that is fixed to a left end of a coupling unit in an upper portion of a frame body of height-direction moving mechanism 340A and transmits a driving force to a right end. Y guides 354 are a rack gear and a rail to which a power of depth-direction drive unit 352A is transmitted, and are disposed at upper and lower ends of left and right Z guides 344A such that longitudinal directions thereof are along the depth direction.

Regarding the transmission of the driving force to Y guides 354, the power of depth-direction drive unit 352A is transmitted to upper Y guide 354 by the transmission shaft as described above. Then, the driving force is transmitted to lower Y guide 354 from the transmission shaft provided in an upper side via a gear belt provided in the frame body of height-direction moving mechanism 340A. Due to the energization of depth-direction drive unit 352A, height-direction moving mechanisms 340A formed in the arch shape move in parallel along the depth direction, and width-direction moving mechanism 330A and holding unit 310A also move in the same manner.

Note that, in the present exemplary embodiment, two holding devices 300A and 300B share four up, lower, left, and light Y guides 354 in order to move in the depth direction (Y direction). Thus, holding device 300A is constantly positioned behind holding device 300B. In addition, in holding device 300B, two holding units 310B and 311B share X guide 334B in order to move in the width direction (X direction). Thus, holding unit 310B is constantly positioned on the left side of holding unit 311B.

In the present exemplary embodiment, although it has been described that the moving mechanism is the rack and pinion type and the motor of the drive unit also moves, the present disclosure is not limited thereto. For example, a ball screw may be used, and the motor may not move.

Working plate device 400 is a device that rotates and moves working plate 410 on which processing target T is placed at the time of recognition processing or folding processing. Working plate device 400 includes a moving mechanism similar to moving mechanism 320. As illustrated in Fig. 2, working plate 410 is a substantially rectangular plate member in which corners of a working plane are chamfered. Working plate 410 is formed not to have corners, and thus, a defect that processing target T such as clothes is caught is suppressed. Working plate 410 is fixed to a rotation shaft such that a longitudinal direction of working plate 410, that is, two edge portions of a long side are parallel to the rotation shaft.

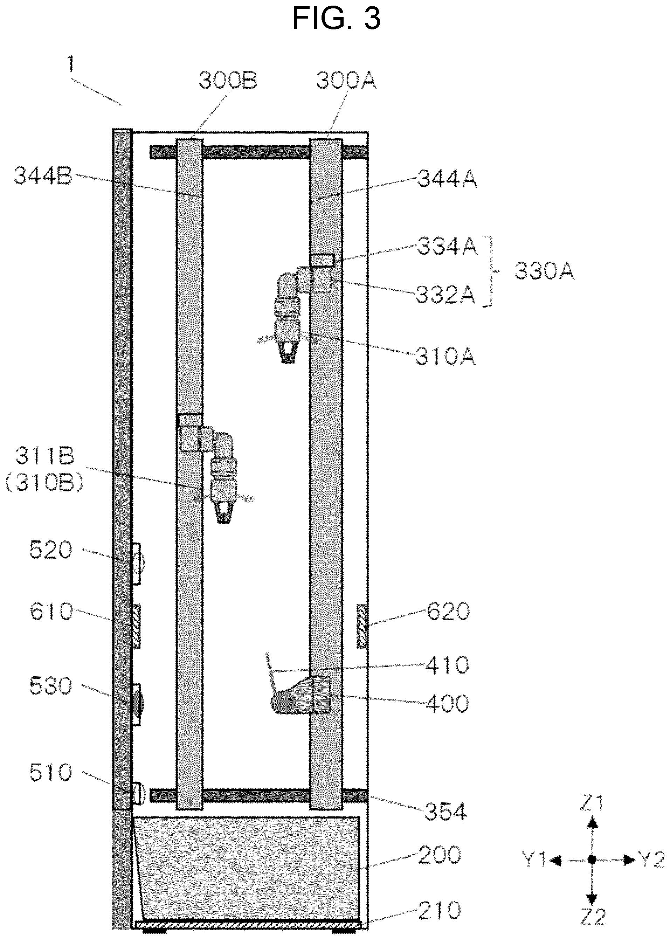

Imaging device 500 is a device that detects an end point or the like of processing target T when grasping processing, recognition processing, and folding processing after processing target T is received are performed. As illustrated in Figs. 2 and 3, imaging device 500 includes first imaging unit 510, second imaging unit 520, and third imaging unit 530. First imaging unit 510 and second imaging unit 520 are, for example, digital still cameras, and are used for end point detection, discrimination of a type of processing target T, and the like. For example, a stereo camera is used as third imaging unit 530, and is used to measure a distance in the depth direction for the end point detection and a width of processing target T. Both imaging units are provided in a frame on a front inner wall side, and an orientation of a lens is rear direction Y2.

Support unit 600 is a wall surface that supports processing target T, such as pressing a folding line or stretching wrinkles of processing target T when processing target T is folded. For example, support unit 600 includes at least one of front-side support unit 610 provided in front of working plate 410 and back-side support unit 620 provided at the rear of the working plate.

Storage device 700 receives and stores processed processing target T from holding device 300. As illustrated in Figs. 1 and 2, storage device 700 includes a plurality of storage units 710. Storage device 700 may include a conveyance unit that receives processing target T and stores the processing target in each storage unit 710. Storage device 700 is disposed adjacent to a processing space in which receiving unit 200, holding device 300, and the like are stored, and the processing space and storage device 700 are combined to constitute clothes processing device 1.

Control device 900 integrally controls the units in clothes processing device 1. Control device 900 principally includes a ROM, a RAM, an arithmetic unit, and an input and output interface. The ROM stores an operating system, a control program for controlling the units of clothes processing device 1, and data necessary for executing the control program. In addition, the arithmetic unit is provided to load the control program stored in the ROM into the RAM or directly execute the control program from the ROM. That is, control device 900 can control clothes processing device 1 by the arithmetic unit executing the control program. Then, data processed by the arithmetic unit is transmitted to each unit (holding device 300, working plate device 400, or the like) of clothes processing device 1 via the input and output interface. Data necessary for processing of the arithmetic unit is received from each unit (imaging device 500 or the like) of clothes processing device 1 via the input and output interface.

### [1-1-2. Details of force detection device]

A technique for detecting the magnitude of the force applied to holding unit 310 and the like in clothes processing device 1 described above will be described.

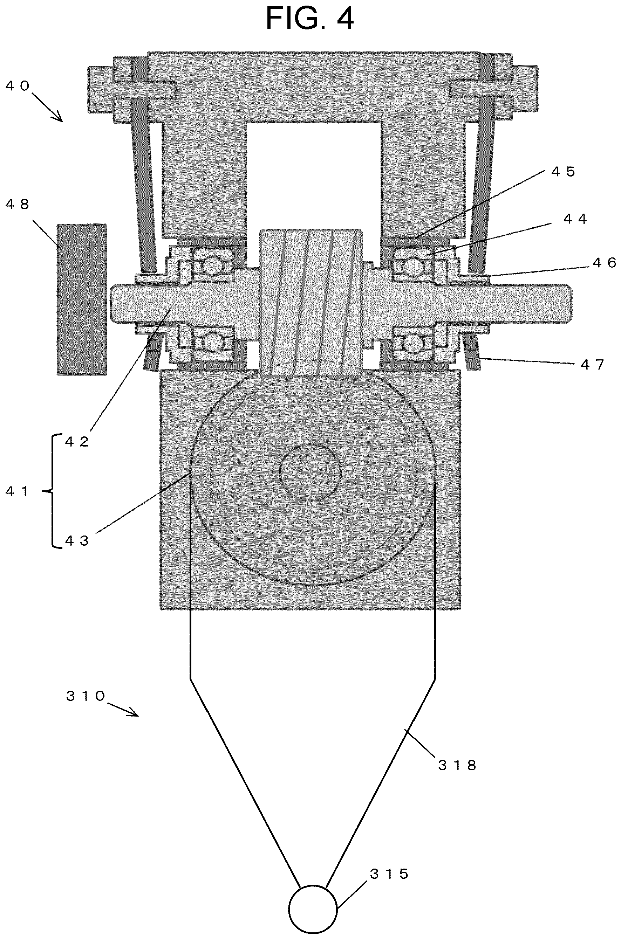

Fig. 4 schematically illustrates a configuration of the force detection device according to the first exemplary embodiment. Holding unit 310 includes hand unit 315 for gripping processing target T and arm unit 318 for controlling a posture of hand unit 315. Force detection device 40 is provided on a posture shaft for rotating arm unit 318, and detects that the external force is applied to holding unit 310. In the example illustrated in Fig. 4, force detection device 40 is provided in a mechanism for rotating arm unit 318 about an X-axis (pitch axis) or a Y-axis (yaw axis) in a horizontal direction. Force detection device 40 may be provided in a mechanism for rotating arm unit 318 about a Z-axis (roll axis) in a vertical direction, or may be provided in a worm reducer of a drive shaft for moving holding unit 310 horizontally or vertically.

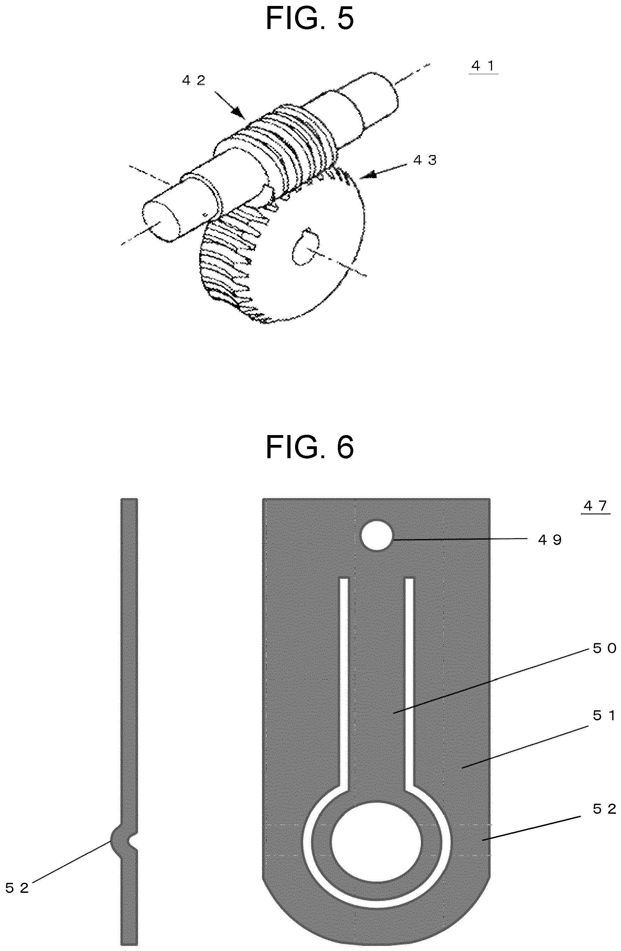

Worm gear 41 includes worm 42 and worm wheel 43. Fig. 5 illustrates a perspective view of worm gear 41. When worm 42 is rotated by a motor or the like, teeth of worm wheel 43 are fed, and worm wheel 43 rotates. As a result, arm unit 318 and hand unit 315 rotate about an axis in the horizontal direction.

Worm 42 is rotatably supported about a rotation shaft by two rolling bearings 44 on shafts on both outer sides of a screw portion. Flange 46 is provided outside each rolling bearing 44. Plain bearing 45 slidably supports worm 42, worm wheel 43, rolling bearing 44, and flange 46 in a direction parallel to the rotation shaft of worm 42. When the external force is applied to rotating worm wheel 43 and torque is applied to worm wheel 43, worm wheel 43 is less likely to rotate, and worm 42, rolling bearing 44, and flange 46 integrally slide with respect to plain bearing 45 by a reaction force. In addition, when the external force is applied to stopped worm wheel 43 and torque is applied to worm wheel 43, worm wheel 43 slightly rotates, and worm 42, rolling bearing 44, and flange 46 integrally slide with respect to plain bearing 45. As described above, when the external force is applied to holding unit 310, the external force is transmitted to the movable unit including worm 42, rolling bearing 44, and flange 46.

Force detection device 40 includes leaf spring 47 and displacement sensor 48. Leaf spring 47 is an example of an elastic body that biases the movable unit in a direction in which displacement is suppressed when the external force is applied to the movable unit including worm 42, rolling bearing 44, and flange 46 that slide integrally to displace the movable unit. A conical spring or the like may be used instead of leaf spring 47.

Displacement sensor 48 detects a displacement amount of the movable unit. In the present exemplary embodiment, displacement sensor 48 detects a distance to the shaft of worm 42. Magnitude of the external force applied to the movable unit can be calculated from the displacement amount of the movable unit detected by displacement sensor 48 and a spring constant of leaf spring 47 that biases the movable unit.

Fig. 6 illustrates a front view and a side view of leaf spring 47. Leaf spring 47 includes attachment hole 49, weak spring portion 50, strong spring portion 51, and contact portion 52. Weak spring portion 50 is configured such that a spring constant is smaller than a spring constant of strong spring portion 51. Strong spring portion 51 is configured such that the spring constant is larger than the spring constant of weak spring portion 50. That is, leaf spring 47 includes a plurality of portions having different rigidities. Contact portion 52 abuts on flange 46 when the movable unit is displaced. Contact portion 52 has a shape protruding toward flange 46 such that a portion other than contact portion 52 does not abut on flange 46. In the present exemplary embodiment, since a plurality of portions having different spring constants are provided in one leaf spring, manufacturing cost can be reduced. In addition, since a thickness can be reduced in a displacement direction, a size can be reduced.

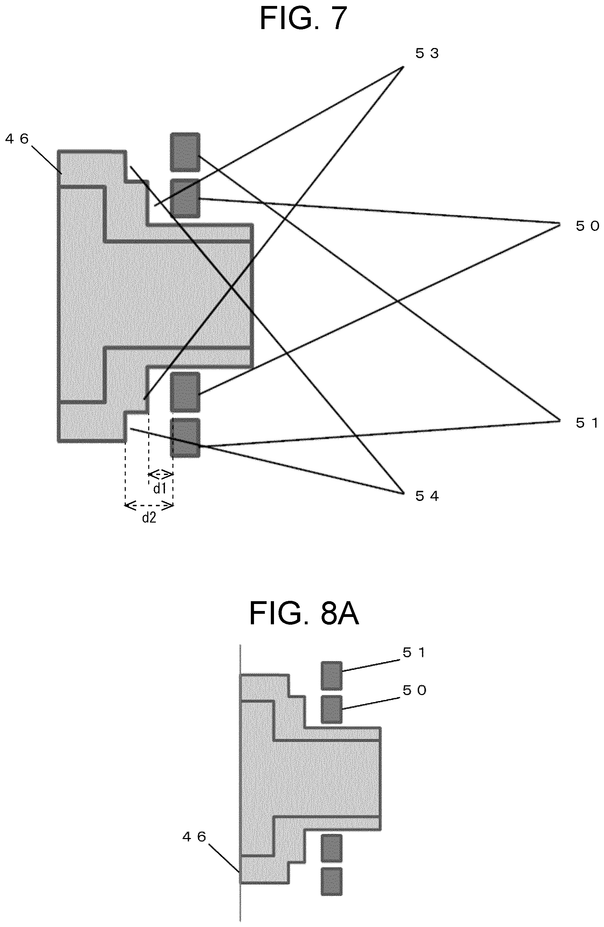

Fig. 7 schematically illustrates a horizontal section of contact portion 52 between flange 46 and leaf spring 47. Fig. 7 illustrates a state where the external force is not applied to the movable unit. Flange 46 is configured such that distance d1 between portion 53 on which weak spring portion 50 abuts and contact portion 52 of weak spring portion 50 is different from distance d2 between portion 54 on which strong spring portion 51 abuts and contact portion 52 of strong spring portion 51. As a result, when the movable unit is displaced, a portion of leaf spring 47 that biases the movable unit changes, and the spring constant of leaf spring 47 can change. Flange 46 is configured such that portion 53 abutting on contact portion 52 of weak spring portion 50 and portion 54 abutting on contact portion 52 of strong spring portion 51 when the movable unit is displaced to have a step. As a result, since it is not necessary to form a step between weak spring portion 50 and strong spring portion 51, manufacturing cost and variation can be suppressed. Note that, weak spring portion 50 may abut on flange 46 even in a state where the external force is not applied to the movable unit. As a result, rattling between flange 46 and leaf spring 47 can be suppressed.

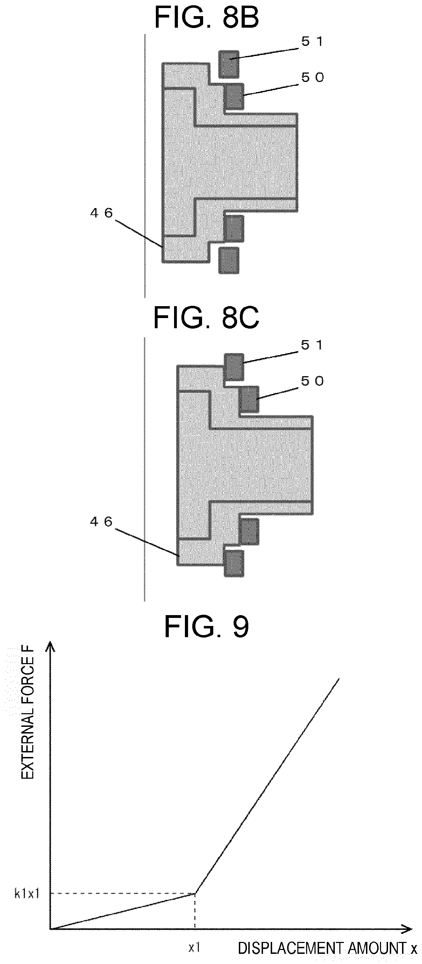

Figs. 8A, 8B, and 8C schematically illustrate states of flange 46 and leaf spring 47 when the movable unit is displaced. As illustrated in Fig. 8A, when neither weak spring portion 50 nor strong spring portion 51 abuts on flange 46, neither weak spring portion 50 nor strong spring portion 51 biases the movable unit. Since flange 46 is configured such that distance d1 is shorter than distance d2, as illustrated in Fig. 8B, in a range in which the displacement amount of the movable unit is small, only weak spring portion 50 first abuts on flange 46 to bias the movable unit. When the displacement amount of the movable unit increases, as illustrated in Fig. 8C, not only weak spring portion 50 but also strong spring portion 51 abuts on flange 46, and both weak spring portion 50 and strong spring portion 51 bias the movable unit.

Fig. 9 illustrates a relationship between the displacement amount of the movable unit and the external force applied to the movable unit. In a range in which displacement amount x of the movable unit is less than or equal to x1, only weak spring portion 50 abuts on flange 46 to bias the movable unit. At this time, assuming that the spring constant of weak spring portion 50 is k1, magnitude of external force F applied to the movable unit is represented by F = k1 × x. As described above, in a range in which the external force is less than or equal to k1x1, the spring constant of leaf spring 47 is reduced, and thus, a detection resolution can be improved. In a range in which displacement amount x of the movable unit is more than or equal to x1, not only weak spring portion 50 but also strong spring portion 51 abuts on flange 46 to bias the movable unit. At this time, assuming that the spring constant of entire weak spring portion 50 and strong spring portion 51 is k2 (≈ k1 + spring constant of strong spring portion 51), the magnitude of external force F applied to the movable unit is represented by F = k2 × x + (k1 - k2)x1. As described above, in the range in which the external force is more than or equal to k1x1, a detection range of the external force can be widened by increasing the spring constant of leaf spring 47. In addition, even in a case where a large external force is applied, since the movable unit can be biased to suppress the displacement amount, the movable unit can be appropriately protected, and it is possible to suppress damage to other components due to contact of the movable unit with other components. Note that, in another example, only strong spring portion 51 may abut on flange 46 to bias the movable unit in the range in which the external force is more than or equal to k1x1.

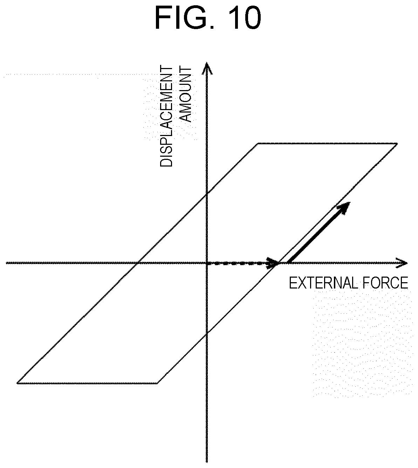

Fig. 10 schematically illustrates a relationship between the displacement amount of the movable unit and the external force applied to the movable unit. Fig. 9 illustrates the relationship between the displacement amount of the movable unit and the external force in an ideal case without hysteresis. However, in practice, as indicated by a broken line arrow in Fig. 10, even though the external force is applied to the movable unit being stationary, the movable unit is not displaced until the external force exceeds a predetermined value due to a static frictional force of the movable unit or the like. When the external force exceeds the predetermined value, the displacement amount increases in accordance with an increase in external force as indicated by a solid arrow in Fig. 10. However, when the external force decreases, similarly, the movable unit is not displaced until the external force falls below the predetermined value. As described above, hysteresis illustrated in Fig. 10 occurs in the relationship between the displacement amount of the movable unit and the external force. Since the relationship between the displacement amount of the movable unit and the external force can change with a change in surface state of the movable unit or the like, there is a possibility that magnitude of the accurate force cannot be detected.

In order to solve such a problem, force detection device 40 according to the first exemplary embodiment acquires and calibrates the relationship between the displacement amount of the movable unit and the external force as needed. Specifically, when a quantitative force is applied from an outside, force detection device 40 acquires a relationship between magnitude of the force applied from the outside and the displacement amount detected by displacement sensor 48 based on the displacement amount of the movable unit detected by displacement sensor 48. Then, based on the acquired relationship, the magnitude of the force applied from the outside is calculated from the displacement amount of the movable unit detected by displacement sensor 48. As a result, it is possible to more accurately detect the force applied to the movable unit while the influence of manufacturing variation, a secular change of a component, a change in an environment around force detection device 40, and the like are suppressed.

When the relationship between the displacement amount of the movable unit and the external force is acquired, the magnitude can be quantitatively grasped, and it is necessary to apply a variable force to the movable unit in the detection range. In the first exemplary embodiment, although it has been described that force detection device 40 is provided in the mechanism for rotating arm unit 318 of holding unit 310, the magnitude of the force applied to worm wheel 43 by a weight of holding unit 310 changes by rotating arm unit 318 about the axis in the horizontal direction, and can be calculated from an angle of arm unit 318 and the weight of holding unit 310. Accordingly, when the relationship between the displacement amount of the movable unit and the external force is acquired, the variable force is applied to the movable unit by using the weight of holding unit 310. As a result, since force detection device 40 can be calibrated without adding a configuration, the number of components of force detection device 40 can be reduced, and inexpensive and compact force detection device 40 can be realized.

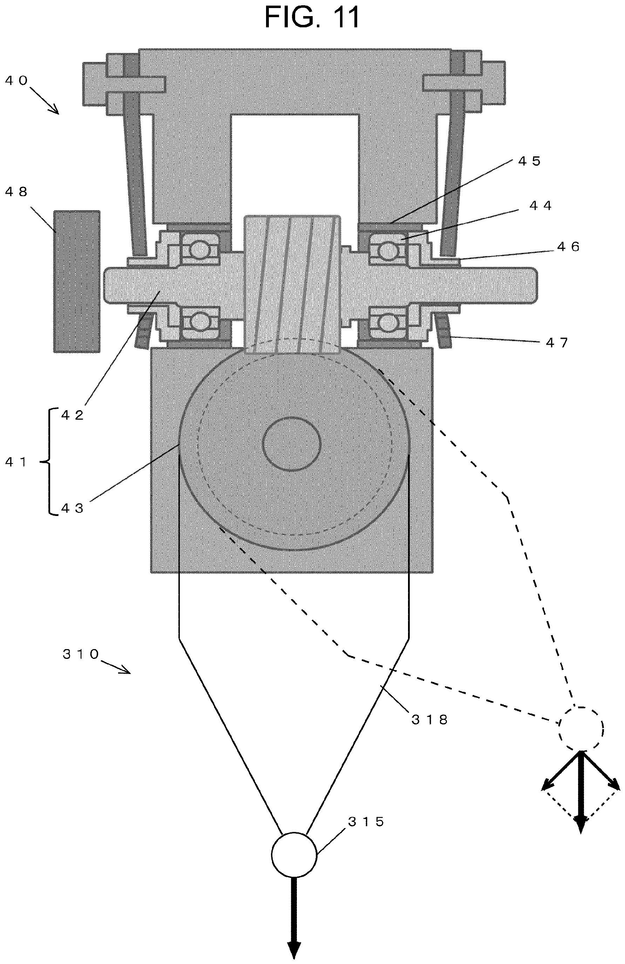

Fig. 11 illustrates a state where arm unit 318 is rotated. The magnitude of the force applied to worm wheel 43 by the weight of holding unit 310 changes by rotating arm unit 318. The magnitude of the force applied to the movable unit can be calculated from a rotation angle of arm unit 318. The magnitude of the force applied to the movable unit may be calculated from a current value of a motor for rotating arm unit 318 or the like. In the first exemplary embodiment, although it has been described that the variable force is applied by using holding unit 310 rotatable about the axis in the horizontal direction, the variable force may be applied by using a rotating object rotatable about an axis at any angle other than the vertical direction.

In a case where a force larger than the weight of holding unit 310 is detected, the calibration may be performed after a known load is gripped by hand unit 315 of holding unit 310. As a result, since the force larger than the weight of holding unit 310 can be applied to the movable unit, the larger force can be accurately detected by force detection device 40.

As illustrated in Fig. 10, the external force cannot be detected in a range (dead zone) in which the movable unit is not displaced even though the external force is applied to the movable unit. In order to solve such a problem, in force detection device 40 according to the first exemplary embodiment, before the magnitude of the force applied to the movable object is detected, a force in a direction opposite to a direction of a force to be detected is applied to the movable object as a preliminary operation.

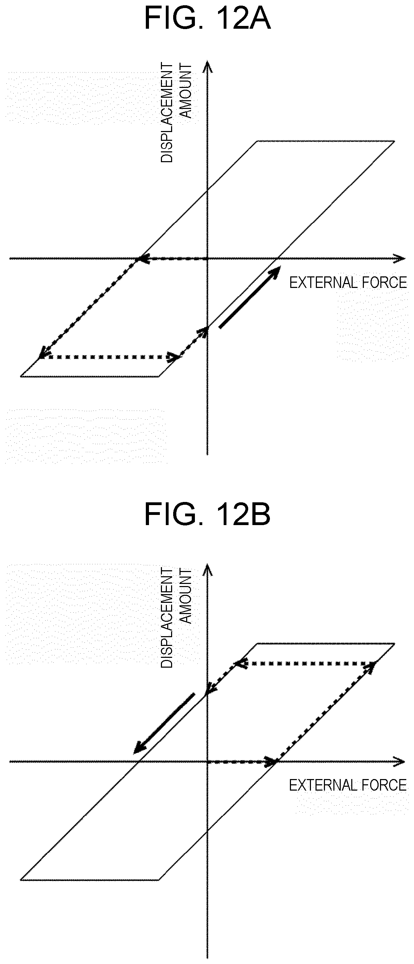

For example, before magnitude of an external force in a positive direction is detected, as illustrated in Fig. 12A, an external force is once applied in a negative direction to displace the movable unit in the negative direction. Thereafter, the external force is returned to zero to cause the movable unit to stand by. At this time, the external force is applied in the negative direction in advance such that the movable unit escapes from the dead zone and is displaced in the positive direction before the external force becomes zero. As a result, when an external force to be detected is applied in the positive direction, since the movable unit can be displaced in accordance with the magnitude of the external force without generating the dead zone, even a minute external force can be accurately detected. In addition, before the magnitude of the external force in the negative direction is detected, as illustrated in Fig. 12B, the external force is once applied in the positive direction to displace the movable unit in the positive direction. Thereafter, the external force is returned to zero to cause the movable unit to stand by. At this time, the external force is applied in the positive direction in advance such that the movable unit escapes from the dead zone and is displaced in the negative direction before the external force becomes zero. As a result, when the external force to be detected is applied in the negative direction, since the movable unit can be displaced in accordance with the magnitude of the external force without generating the dead zone, even a minute external force can be accurately detected. As described above, according to force detection device 40 of the first exemplary embodiment, since it is possible to detect the force without depending on the dead zone, it is possible to set the force detection device to be less susceptible to the influence such as the secular change of the component.

In the preliminary operation, a force that is varied by using the known load may be applied to the movable object. For example, similarly to a case where force detection device 40 is calibrated, the variable force may be applied to the movable object by rotating arm unit 318. As a result, the number of components of force detection device 40 can be reduced, and inexpensive and small force detection device 40 can be realized. In a case where it is necessary to apply the force larger than the weight of holding unit 310, such as a case where a width of the dead zone is large, a force in an opposite direction may be applied to the movable object after the known load is gripped by hand unit 315 of holding unit 310. As a result, the force larger than the weight of holding unit 310 can be applied to the movable unit.

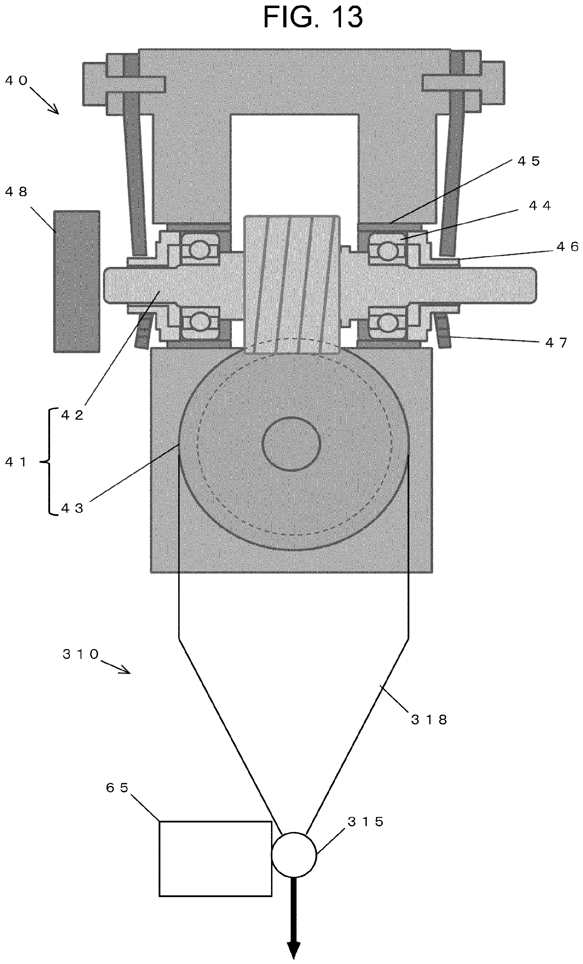

In the preliminary operation, the variable force may be applied to the movable unit by using a torque limiter provided at worm wheel 43 for rotating holding unit 310, a stopper for stopping the rotation of holding unit 310, or the like. For example, as illustrated in Fig. 13, the force in the opposite direction may be applied to the movable unit by pressing holding unit 310 against stopper 65. The force applied to the movable unit may be changed by changing a speed at which holding unit 310 is pressed against stopper 65. Holding unit 310 is pressed against stopper 65 until the torque limiter provided at worm wheel 43 operates, and thus, a constant force can be applied to the movable unit whenever the preliminary operation is performed. As a result, even in a case where it is difficult to apply the force to the movable unit by using the weight of the component, the force can be applied to the movable unit to perform the preliminary operation.

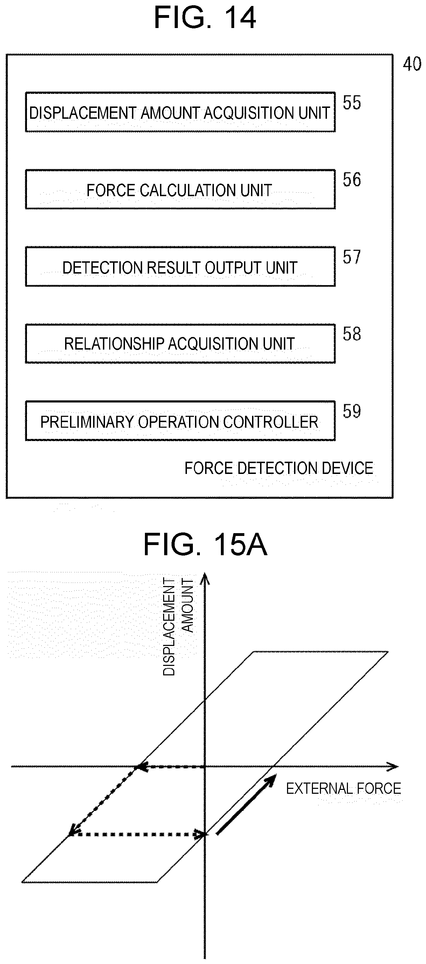

Fig. 14 illustrates a functional configuration of force detection device 40 according to the first exemplary embodiment. In force detection device 40, a configuration for calculating the magnitude of the external force applied to holding unit 310 and the like is provided in control device 900. Force detection device 40 includes displacement amount acquisition unit 55, force calculation unit 56, detection result output unit 57, relationship acquisition unit 58, and preliminary operation controller 59.

Displacement amount acquisition unit 55 acquires the displacement amount of the movable unit detected by displacement sensor 48. Force calculation unit 56 calculates the magnitude of the external force from the displacement amount of the movable unit acquired by displacement amount acquisition unit 55 based on the relationship between the displacement amount of the movable unit and the external force. Detection result output unit 57 outputs the magnitude of the external force calculated by force calculation unit 56.

Relationship acquisition unit 58 acquires the relationship between the magnitude of the force applied from the outside and the displacement amount detected by displacement sensor 48 based on the displacement amount of the movable unit detected by displacement sensor 48 when the quantitative force is applied from the outside. Relationship acquisition unit 58 may acquire the relationship between the displacement amount of the movable unit and the external force whenever the external force is detected, or may acquire the relationship between the displacement amount of the movable unit and the external force for each predetermined period or for each predetermined number of times of detection.

Before the magnitude of the force applied to the movable object is detected, preliminary operation controller 59 applies the force in the direction opposite to the direction of the force to be detected to the movable object as the preliminary operation.

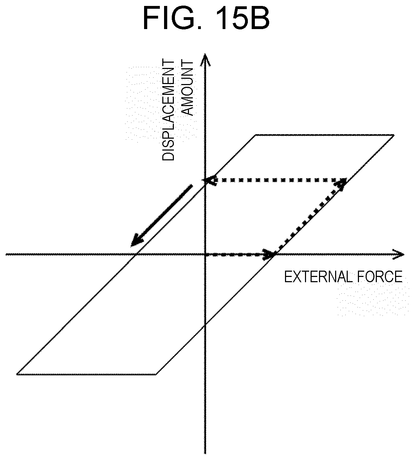

Force detection device 40 may perform only the calibration of the relationship between the displacement amount of the movable unit and the external force, or may perform only the preliminary operation. In the former case, force detection device 40 may not include preliminary operation controller 59. In the latter case, force detection device 40 may not include relationship acquisition unit 58. Further, the former case and the latter case may be combined. In this case, as illustrated in Figs. 15A and 15B, since magnitude of a minimum force required to be applied in the opposite direction to escape from the dead zone in the preliminary operation can be grasped from the calibration result of the relationship between the displacement amount of the movable unit and the external force, there is an effect that it is not necessary to apply more force than necessary. In addition, there is an effect that it is possible to prevent a situation in which the movable unit cannot escape the dead zone since the force applied in the opposite direction in the preliminary operation is too small.

### [1-2. Operation]

The operation and effect of clothes processing device 1 having the above-mentioned configuration are hereinafter described.

Control device 900 controls holding unit 310 to advance processing such as unfolding and folding of processing target T. Force detection device 40 detects the external force applied to holding unit 310. When the external force is applied to holding unit 310, the torque is applied to worm wheel 43 provided in the moving mechanism of holding unit 310, and the movable unit is displaced. Displacement amount acquisition unit 55 acquires the displacement amount of the movable unit detected by displacement sensor 48. Force calculation unit 56 calculates the magnitude of the external force from the displacement amount of the movable unit acquired by displacement amount acquisition unit 55 based on the relationship between the displacement amount of the movable unit and the external force. Detection result output unit 57 outputs the magnitude of the external force calculated by force calculation unit 56. Relationship acquisition unit 58 acquires the relationship between the displacement amount of the movable unit and the external force as necessary. Preliminary operation controller 59 performs the preliminary operation as necessary.

For example, control device 900 controls the amount of force by detecting a force when holding unit 310 grips and tightens processing target T, or stops holding unit 310 by detecting a force when holding unit 310 comes into contact with another configuration or the like during the operation and determining that an abnormality occurs. As a result, it is possible to prevent processing target T from being stretched or broken too much or prevent an abnormal force from being applied to holding unit 310.

In addition, as described above, even in a case where the external force is applied due to, for example, contact of another holding unit 310 in operation with stopped holding unit 310, since the external force applied to holding unit 310 can be detected, control device 900 can also detect the occurrence of abnormality from stopped holding unit 310.

As described above, force detection device 40 detects the force generated in worm wheel 43. As a result, clothes processing device 1 can safely operate not to damage processing target T or break the mechanism such as holding unit 310.

### [1-3. Effects and the like]

As described above, in the present exemplary embodiment, force detection device 40 includes leaf spring 47 that biases the movable unit in the direction in which the displacement is suppressed when the force is applied to the movable unit to displace the movable unit, and displacement sensor 48 that detects the displacement of the movable unit, and leaf spring 47 includes the plurality of portions having different rigidities. As a result, it is possible to detect a wide range of force while increases in cost and size are suppressed, and it is possible to improve force detection accuracy.

In the present exemplary embodiment, force detection device 40 is configured such that the portion of leaf spring 47 that biases the movable unit changes when the movable unit is displaced. As a result, it is possible to detect a wide range of force while increases in cost and size are suppressed, and it is possible to improve force detection accuracy.

In the present exemplary embodiment, the elastic body that biases the movable unit in the direction in which the displacement is suppressed is leaf spring 47, and leaf spring 47 includes the plurality of portions having different spring constants. As a result, it is possible to detect a wide range of force while increases in cost and size are suppressed, and it is possible to improve force detection accuracy.

In the present exemplary embodiment, in a state where the movable unit is not displaced, the distances between the plurality of portions of leaf spring 47 and the portions of the movable unit that abut on the plurality of portions of leaf spring 47 when the movable unit is displaced are different. As a result, the spring constant of leaf spring 47 can be changed with a simple configuration.

In the present exemplary embodiment, the portions of flange 46 that abuts on the plurality of portions of leaf spring 47 have the step when the movable unit is displaced. As a result, since it is not necessary to form the step on leaf spring 47, the manufacturing cost and variation can be suppressed.

In the present exemplary embodiment, the movable unit includes worm 42 of worm gear 41, leaf spring 47 biases worm 42 in the direction parallel to the rotation shaft of worm 42, and displacement sensor 48 detects displacement in the direction parallel to the rotation shaft of worm 42. As a result, the torque applied to worm wheel 43 can be detected. In addition, even though the torque applied to worm wheel 43 is minute, it is possible to accurately detect the torque.

In the present exemplary embodiment, in a state where the force is not applied to the movable unit, a portion having a lowest spring constant of leaf spring 47 biases the movable unit. As a result, the rattling between the movable unit and leaf spring 47 can be suppressed.

In the present exemplary embodiment, when the displacement amount of the movable unit increases, the portion of leaf spring 47 that biases the movable unit is added. As a result, when the external force applied to the movable unit is large, a biasing force by leaf spring 47 can be further increased.

In the present exemplary embodiment, force detection device 40 includes displacement amount acquisition unit 55 that acquires the displacement amount of the movable unit detected by displacement sensor 48, and force calculation unit 56 that calculates the magnitude of the force applied to the movable unit from the displacement amount of the movable unit acquired by displacement amount acquisition unit 55. As a result, it is possible to improve detection accuracy.

In the present exemplary embodiment, in the force detection method, when the force is applied to the movable unit to displace the movable unit, the movable unit is biased in the direction in which the displacement is suppressed by at least weak spring portion 50 of leaf spring 47 including the plurality of portions having different spring constants until the displacement amount reaches first value x1, when the displacement amount exceeds first value x1, the movable unit is biased in the direction in which the displacement is suppressed by at least strong spring portion 51 of leaf spring 47, and the magnitude of the force applied to the movable unit is detected by detecting the displacement amount. As a result, it is possible to detect a wide range of force while increases in cost and size are suppressed, and it is possible to improve force detection accuracy.

In the present exemplary embodiment, clothes processing device 1 includes holding unit 310 for holding the processing target, the movable unit displaced when the force is applied to holding unit 310, and force detection device 40 that detects the magnitude of the force applied to holding unit 310. Force detection device 40 includes leaf spring 47 that biases the movable unit in the direction in which the displacement is suppressed when the force is applied to holding unit 310 to displace the movable unit, and displacement sensor 48 that detects the displacement of the movable unit. Leaf spring 47 includes the plurality of portions having different rigidities. As a result, since the detection accuracy of the force applied to holding unit 310 can be improved, holding unit 310 can be appropriately controlled.

The first exemplary embodiment has been described above as an example of the technique disclosed in the present application. However, the technique in the present disclosure is not limited to the above exemplary embodiment, and can also be applied to exemplary embodiments in which change, substitution, addition, omission, and the like are made. In addition, new exemplary embodiments can be made by combining components described in the first exemplary embodiment.

For example, the technique of the first exemplary embodiment can be used to detect a force applied to any movable object.

In the first exemplary embodiment, although it has been described that weak spring portion 50 and strong spring portion 51 are provided in leaf spring 47, in another example, a leaf spring having a small spring constant and a leaf spring having a large spring constant may be separately provided. In addition, elastic bodies having three or more different rigidities may be provided.

Note that, the exemplary embodiment described above is to exemplify the technique in the present disclosure, and thus, various modifications, replacements, additions, omissions, and the like can be made in the scope of claims or in an equivalent scope of the claims.

### INDUSTRIAL APPLICABILITY

The present disclosure is applicable to a force detection device that detects a force.

### REFERENCE MARKS IN THE DRAWINGS

1: clothes processing device
T: processing target
40: force detection device
41: worm gear
42: worm
43: worm wheel
44: rolling bearing
45: plain bearing
46: flange
47: leaf spring
48: displacement sensor
49: attachment hole
50: weak spring portion
51: strong spring portion
52: contact portion
53: portion
54: portion
55: displacement amount acquisition unit
56: force calculation unit
57: detection result output unit
58: relationship acquisition unit
59: preliminary operation controller
65: stopper
100: housing
110: frame
120: outline
200: receiving unit
210: guide rail
300, 300A, 300B: holding device
310, 310A, 310B, 311B: holding unit
320, 320A, 320B: moving mechanism
330, 330A, 330B: width-direction moving mechanism
332A, 332B: width-direction drive unit
334A, 334B: X guide
340A, 340B: height-direction moving mechanism
342A, 342B: height-direction drive unit
344A, 344B: Z guide
350A, 350B: depth-direction moving mechanism
352A, 352B: depth-direction drive unit
354A, 354B: Y guide
400: working plate device
410: working plate
500: imaging device
510: first imaging unit
520: second imaging unit
530: third imaging unit
600: support unit
610: front-side support unit
620: back-side support unit
700: storage device
710: storage unit
900: control device
X1: left direction
X2: right direction
Y1: front direction
Y2: rear direction
Z1: up direction
Z2: down direction

## Claims

1. A force detection device comprising:
an elastic body that biases a movable unit in a direction in which displacement of the movable unit is suppressed when a force is applied to the movable unit to displace the movable unit; and
a sensor that detects the displacement of the movable unit,
wherein the elastic body includes a plurality of portions having different rigidities.

2. The force detection device according to Claim 1, wherein a portion of the elastic body that biases the movable unit changes when the movable unit is displaced.

3. The force detection device according to Claim 1 or 2, wherein
the elastic body is a leaf spring, and
the leaf spring includes a plurality of portions having different spring constants.

4. The force detection device according to Claim 3, wherein, in a state where the movable unit is not displaced, distances between the plurality of portions of the leaf spring and portions of the movable unit that abut on the plurality of portions of the leaf spring when the movable unit is displaced are different.

5. The force detection device according to Claim 4, wherein the movable unit is configured to cause the portions of the movable unit that abut on the plurality of portions of the leaf spring to have a step when the movable unit is displaced.

6. The force detection device according to any one of Claims 1 to 5, wherein
the movable unit includes a worm of a worm gear,
the elastic body biases the worm in a direction parallel to a rotation shaft of the worm, and
the sensor detects displacement in the direction parallel to the rotation shaft of the worm.

7. The force detection device according to any one of Claims 1 to 6, wherein, in a state where the force is not applied to the movable unit, a portion of the elastic body having a lowest rigidity biases the movable unit.

8. The force detection device according to any one of Claims 1 to 7, wherein, when a displacement amount of the movable unit increases, a portion of the elastic body that biases the movable unit is added.

9. The force detection device according to any one of Claims 1 to 8, further comprising:
a displacement amount acquisition unit that acquires a displacement amount of the movable unit detected by the sensor; and
a force calculation unit that calculates magnitude of the force applied to the movable unit from the displacement amount of the movable unit acquired by the displacement amount acquisition unit.

10. A force detection method comprising detecting, when a force is applied to a movable unit to displace the movable unit, magnitude of the force applied to the movable unit by biasing the movable unit in a direction in which displacement is suppressed by at least a first portion of an elastic body including a plurality of portions having different rigidities until a displacement amount reaches a first value, biasing the movable unit in the direction in which the displacement is suppressed by at least a second portion of the elastic body when the displacement amount exceeds the first value, and detecting the displacement amount.

11. A clothes processing device comprising;
a holding device that holds a processing target;
a movable unit that is displaced when a force is applied to the holding device; and
a force detection device that detects magnitude of the force applied to the holding device, wherein
the force detection device includes
an elastic body that biases the movable unit in a direction in which displacement is suppressed when the force is applied to the holding device to displace the movable unit, and
a sensor that detects the displacement of the movable unit, and
the elastic body includes a plurality of portions having different rigidities.
